# EUROPEAN PATENT SPECIFICATION

(11) **EP 2 587 682 B1**
(45) Date of publication and mention of the grant of the patent: **18.06.2014**
(21) Application number: 12007187.3
(22) Date of filing: 17.10.2012
(51) Int. Cl.: H04B 1/48

(54) **Transmit/receive switch with ESD protection and methods for use therewith**
Senden-/Empfangen-Schalter mit elektrostatischem Breitbandentladungsschutz und Verfahren zur Verwendung damit
Commutateur de transmission/réception avec protection ESD et procédés d'utilisation associés

(30) Priority: 28.10.2011 US 201161552835 P; 18.12.2011 US 201113329301
(43) Date of publication of application: 01.05.2013
(73) Proprietor: Broadcom Corporation, Irvine, CA 92617 (US)
(72) Inventor: Lee, Brian, San Diego, CA 92128 (US); Afsahi, Ali, San Diego, CA 92129 (US)
(74) Representative: Jehle, Volker Armin

(56) References cited:
- US-A1- 2009 298 443
- US-A1- 2011 057 860
- US-A1- 2011 281 531

## Description

### BACKGROUND OF THE INVENTION

### TECHNICAL FIELD OF THE INVENTION

This invention relates generally to wireless communication and more particularly to antennas used to support wireless communications.

### DESCRIPTION OF RELATED ART

Communication systems are known to support wireless and wireline communications between wireless and/or wireline communication devices. Such communication systems range from national and/or international cellular telephone systems to the Internet to point-to-point in-home wireless networks to radio frequency identification (RFID) systems. Each type of communication system is constructed, and hence operates, in accordance with one or more communication standards. For instance, wireless communication systems may operate in accordance with one or more standards including, but not limited to, RFID, IEEE 802.11, Bluetooth, advanced mobile phone services (AMPS), digital AMPS, global system for mobile communications (GSM), code division multiple access (CDMA), local multi-point distribution systems (LMDS), multichannel-multi-point distribution systems (MMDS), and/or variations thereof.

Depending on the type of wireless communication system, a wireless communication device, such as a cellular telephone, two-way radio, personal digital assistant (PDA), personal computer (PC), laptop computer, home entertainment equipment, RFID reader, RFID tag, et cetera communicates directly or indirectly with other wireless communication devices. For direct communications (also known as point-to-point communications), the participating wireless communication devices tune their receivers and transmitters to the same channel or channels (e.g., one of the plurality of radio frequency (RF) carriers of the wireless communication system) and communicate over that channel(s). For indirect wireless communications, each wireless communication device communicates directly with an associated base station (e.g., for cellular services) and/or an associated access point (e.g., for an in-home or in-building wireless network) via an assigned channel. To complete a communication connection between the wireless communication devices, the associated base stations and/or associated access points communicate with each other directly, via a system controller, via the public switch telephone network, via the Internet, and/or via some other wide area network.

For each wireless communication device to participate in wireless communications, it includes a built-in radio transceiver (i.e., receiver and transmitter) or is coupled to an associated radio transceiver (e.g., a station for in-home and/or in-building wireless communication networks, RF modem, etc.). As is known, the receiver is coupled to the antenna and includes a low noise amplifier, one or more intermediate frequency stages, a filtering stage, and a data recovery stage. The low noise amplifier receives inbound RF signals via the antenna and amplifies then. The one or more intermediate frequency stages mix the amplified RF signals with one or more local oscillations to convert the amplified RF signal into baseband signals or intermediate frequency (IF) signals. The filtering stage filters the baseband signals or the IF signals to attenuate unwanted out of band signals to produce filtered signals. The data recovery stage recovers raw data from the filtered signals in accordance with the particular wireless communication standard.

As is also known, the transmitter includes a data modulation stage, one or more intermediate frequency stages, and a power amplifier. The data modulation stage converts raw data into baseband signals in accordance with a particular wireless communication standard. The one or more intermediate frequency stages mix the baseband signals with one or more local oscillations to produce RF signals. The power amplifier amplifies the RF signals prior to transmission via an antenna.

Currently, wireless communications occur within licensed or unlicensed frequency spectrums. For example, wireless local area network (WLAN) communications occur within the unlicensed Industrial, Scientific, and Medical (ISM) frequency spectrum of 900 MHz, 2.4 GHz, and 5 GHz. While the ISM frequency spectrum is unlicensed there are restrictions on power, modulation techniques, and antenna gain. Another unlicensed frequency spectrum is the V-band of 55-64 GHz.

US 2009/298443 A1 discloses A CMOS monolithic transmit/receive switch comprising a single pole double throw switch (SPDT) module operable to selectively connect an antenna port to either a transmit port or to a receive port. A transmit matching network comprising a first transmission line matches the impedance of the transmit port of the SPDT module to a transmit impedance, and a first shunt transistor is operable to selectively ground a transmitter end of the first transmission line.

US 2011/057860 A1 discloses a transmission and reception module including an antenna, a transmission circuit, a wave detection circuit, a high-frequency switch, a small-signal high-frequency diode limiter circuit, and a first power amplifier. The antenna transmits a transmission wave, or receives a reception wave. The transmission circuit is connected to the antenna via a circulator and supplies the transmission wave to the antenna. The wave detection circuit is connected to the antenna via the circulator and branches the reception wave received by the antenna to generate a control signal based on one branched reception wave.

Other disadvantages of conventional approaches will be evident to one skilled in the art when presented the disclosure that follows.

### BRIEF SUMMARY OF THE INVENTION

The present invention is directed to apparatus and methods of operation that are further described in the following Brief Description of the Drawings, the Detailed Description of the Invention, and the claims.

According to an aspect, a transmit/receive (T/R) switch is provided for use in conjunction with a radio frequency (RF) transceiver, the T/R switch comprising:
a first transistor circuit that is operable to couple a power amplifier of the RF transceiver to an antenna port in response to a transmit enable signal indicating a transmit state;
a second transistor circuit operable to couple a low noise amplifier input to a first ground in response to the transmit enable signal indicating the transmit state; and
an electrostatic discharge (ESD) circuit that includes a first diode that is coupled in parallel to the second transistor circuit.

Advantageously, the ESD circuit includes a second diode that coupled the low noise amplifier input to a power supply voltage.

Advantageously, the ESD circuit includes a voltage clamp coupled to the second diode that clamps the power supply voltage to a second ground.

Advantageously, the low noise amplifier input is inductively coupled to the antenna port and wherein a low noise amplifier of the RF transceiver is capacitively coupled to the low noise amplifier input.

Advantageously, the power amplifier generates a differential output signal that is converted to a single-ended output signal via a balun.

Advantageously, the first transistor circuit is capacitively coupled to the single-ended output signal and to the antenna port.

Advantageously, the first transistor circuit includes a triple-well n-channel metal oxide semiconductor (NMOS) transistor.

Advantageously, the first transistor circuit includes a plurality of transistor nodes that are floated via a corresponding plurality of resistors.

Advantageously, the first transistor circuit is operable to decouple the power amplifier of the RF transceiver to the antenna port in response to the transmit enable signal indicating a receive state; and
wherein the second transistor circuit is operable to decouple the low noise amplifier input to the first ground in response to the transmit enable signal indicating the receive state.

Advantageously, the RF transceiver operates in accordance with an 802.11ac standard.

According to an aspect, a method is provided for use in conjunction with a transmit/receive (T/R) switch for use in conjunction with a radio frequency (RF transceiver, the method comprising:
coupling, via a first transistor circuit, a power amplifier of the RF transceiver to an antenna port in response to a transmit enable signal indicating a transmit state;
coupling, via a second transistor circuit, a low noise amplifier input to a first ground in response to the transmit enable signal indicating the transmit state; and
coupling an electrostatic discharge (ESD) circuit that includes a first diode in parallel to the second transistor circuit.

Advantageously, the method further comprises:
coupling, via a second diode of the ESD circuit, the low noise amplifier input to a power supply voltage.

Advantageously, the method further comprises:
clamping, via a voltage clamp coupled to the second diode, the power supply voltage to a second ground.

Advantageously, the method further comprises:
inductively coupling the low noise amplifier input to the antenna port; and
capacitively coupling the low noise amplifier of the RF transceiver to the low noise amplifier input.

Advantageously, the method further comprises:
generating, via the power amplifier, a differential output signal; and
converting the differential output signal to a single-ended output signal via a balun.

Advantageously, the method further comprises:
capacitively coupling the first transistor circuit to the single-ended output signal and to the antenna port.

Advantageously, the first transistor circuit includes a triple-well n-channel metal oxide semiconductor (NMOS) transistor.

Advantageously, the method further comprises:
floating a plurality of transistor nodes of the first transistor circuit via a corresponding plurality of resistors.

Advantageously, the method further comprises:
decoupling, via the first transistor circuit, the power amplifier of the RF transceiver to the antenna port in response to the transmit enable signal indicating a receive state;
decoupling, via the second transistor circuit, the low noise amplifier input to the first ground in response to the transmit enable signal indicating the receive state.

Advantageously, the RF transceiver operates in accordance with an 802.11ac standard.

Other features and advantages of the present invention will become apparent from the following detailed description of the invention made with reference to the accompanying drawings.

### BRIEF DESCRIPTION OF THE SEVERAL VIEWS OF THE DRAWING(S)

Figure 1 is a schematic block diagram of an embodiment of a wireless communication system in accordance with the present invention;
Figure 2 is a schematic block diagram of another embodiment of a wireless communication system in accordance with the present invention;
Figure 3 is a schematic block diagram of an embodiment of a wireless transceiver 125 in accordance with the present invention;
Figure 4 is a schematic block diagram of an embodiment of a transmit receive switch in accordance with the present invention;
Figure 5 is a schematic block diagram of an embodiment of a transmit receive switch in accordance with the present invention;
Figure 6 is a schematic block diagram of an embodiment of a transmit receive switch in accordance with the present invention;
Figure 7 is a schematic block diagram of an embodiment of a transmit receive switch in accordance with the present invention;
Figure 8 is a flow diagram of an embodiment of a method in accordance with the present invention; and
Figure 9 is a flow diagram of an embodiment of a method in accordance with the present invention.

### DETAILED DESCRIPTION OF THE INVENTION

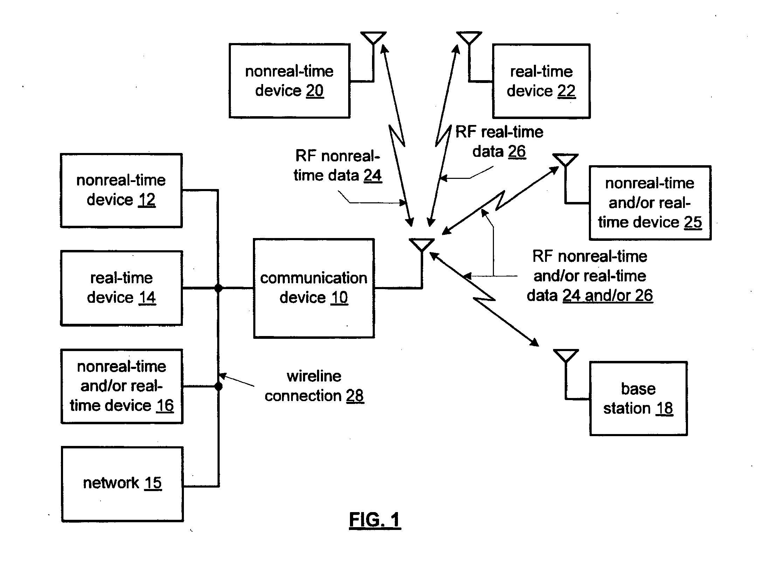

Figure 1 is a schematic block diagram of an embodiment of a communication system in accordance with the present invention. In particular a communication system is shown that includes a communication device 10 that communicates real-time data 24 and/or non-real-time data 26 wirelessly with one or more other devices such as base station 18, non-real-time device 20, real-time device 22, and non-real-time and/or real-time device 25. In addition, communication device 10 can also optionally communicate over a wireline connection with network 15, non-real-time device 12, real-time device 14, non-real-time and/or real-time device 16.

In an embodiment of the present invention the wireline connection 28 can be a wired connection that operates in accordance with one or more standard protocols, such as a universal serial bus (USB), Institute of Electrical and Electronics Engineers (IEEE) 488, IEEE 1394 (Firewire), Ethernet, small computer system interface (SCSI), serial or parallel advanced technology attachment (SATA or PATA), or other wired communication protocol, either standard or proprietary. The wireless connection can communicate in accordance with a wireless network protocol such as WiHD, NGMS, IEEE 802.11a, ac, b, g, n, or other 802.11 standard protocol, Bluetooth, Ultra-Wideband (UWB), WIMAX, or other wireless network protocol, a wireless telephony data/voice protocol such as Global System for Mobile Communications (GSM), General Packet Radio Service (GPRS), Enhanced Data Rates for Global Evolution (EDGE), Personal Communication Services (PCS), or other mobile wireless protocol or other wireless communication protocol, either standard or proprietary. Further, the wireless communication path can include separate transmit and receive paths that use separate carrier frequencies and/or separate frequency channels. Alternatively, a single frequency or frequency channel can be used to bi-directionally communicate data to and from the communication device 10.

Communication device 10 can be a mobile phone such as a cellular telephone, a local area network device, personal area network device or other wireless network device, a personal digital assistant, game console, personal computer, laptop computer, or other device that performs one or more functions that include communication of voice and/or data via wireline connection 28 and/or the wireless communication path. Further communication device 10 can be an access point, base station or other network access device that is coupled to a network 15 such at the Internet or other wide area network, either public or private, via wireline connection 28. In an embodiment of the present invention, the real-time and non-real-time devices 12, 14 16, 18, 20, 22 and 25 can be personal computers, laptops, PDAs, mobile phones, such as cellular telephones, devices equipped with wireless local area network or Bluetooth transceivers, FM tuners, TV tuners, digital cameras, digital camcorders, or other devices that either produce, process or use audio, video signals or other data or communications.

In operation, the communication device includes one or more applications that include voice communications such as standard telephony applications, voice-over-Internet Protocol (VoIP) applications, local gaming, Internet gaming, email, instant messaging, multimedia messaging, web browsing, audio/video recording, audio/video playback, audio/video downloading, playing of streaming audio/video, office applications such as databases, spreadsheets, word processing, presentation creation and processing and other voice and data applications. In conjunction with these applications, the real-time data 26 includes voice, audio, video and multimedia applications including Internet gaming, etc. The non-real-time data 24 includes text messaging, email, web browsing, file uploading and downloading, etc.

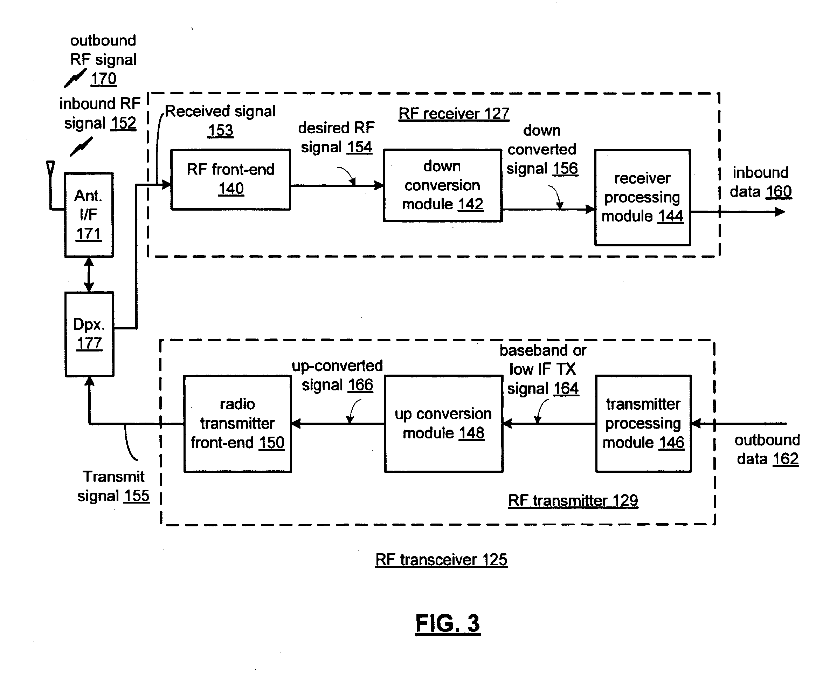

In an embodiment of the present invention, the communication device 10 includes a wireless transceiver that includes one or more features or functions of the present invention. Such wireless transceivers shall be described in greater detail in association with FIGs. 3-9 that follow.

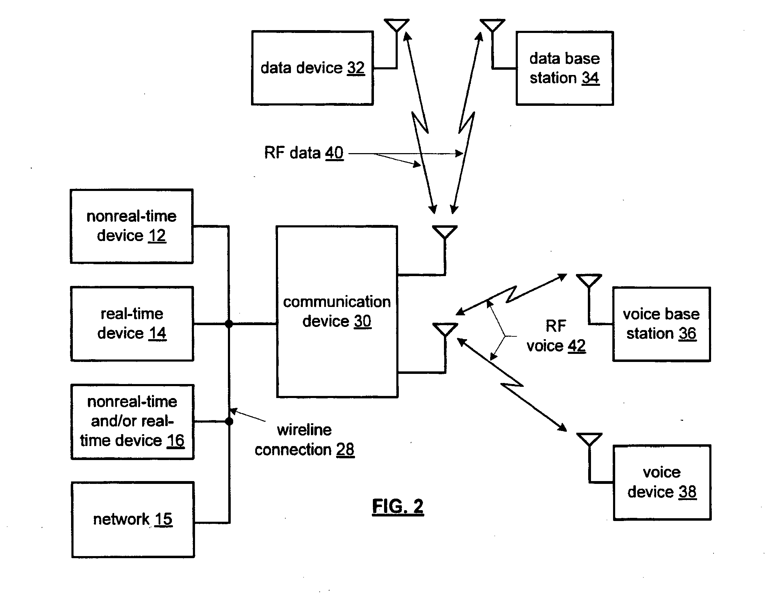

Figure 2 is a schematic block diagram of an embodiment of another communication system in accordance with the present invention. In particular, FIG. 2 presents a communication system that includes many common elements of FIG. 1 that are referred to by common reference numerals. Communication device 30 is similar to communication device 10 and is capable of any of the applications, functions and features attributed to communication device 10, as discussed in conjunction with FIG. 1. However, communication device 30 includes two or more separate wireless transceivers for communicating, contemporaneously, via two or more wireless communication protocols with data device 32 and/or data base station 34 via RF data 40 and voice base station 36 and/or voice device 38 via RF voice signals 42.

Figure 3 is a schematic block diagram of an embodiment of a wireless transceiver 125 in accordance with the present invention. The RF transceiver 125 represents a wireless transceiver for use in conjunction with communication devices 10 or 30, base station 18, non-real-time device 20, real-time device 22, and non-real-time, real-time device 25, data device 32 and/or data base station 34, and voice base station 36 and/or voice device 38. RF transceiver 125 includes an RF transmitter 129, and an RF receiver 127. The RF receiver 127 includes a RF front end 140, a down conversion module 142 and a receiver processing module 144. The RF transmitter 129 includes a transmitter processing module 146, an up conversion module 148, and a radio transmitter front-end 150.

As shown, the receiver and transmitter are each coupled to an antenna through an antenna interface 171 and a diplexer (duplexer) 177, that couples the transmit signal 155 to the antenna to produce outbound RF signal 170 and couples inbound signal 152 to produce received signal 153. Alternatively, a transmit/receive switch can be used in place of diplexer 177. While a single antenna is represented, the receiver and transmitter may share a multiple antenna structure that includes two or more antennas. In another embodiment, the receiver and transmitter may share a multiple input multiple output (MIMO) antenna structure, diversity antenna structure, phased array or other controllable antenna structure that includes a plurality of antennas and other RF transceivers similar to RF transceiver 125. Each of these antennas may be fixed, programmable, and antenna array or other antenna configuration. Also, the antenna structure of the wireless transceiver may depend on the particular standard(s) to which the wireless transceiver is compliant and the applications thereof.

In operation, the RF transmitter 129 receives outbound data 162. The transmitter processing module 146 packetizes outbound data 162 in accordance with a millimeter wave protocol or wireless telephony protocol, either standard or proprietary, to produce baseband or low intermediate frequency (IF) transmit (TX) signals 164 that includes an outbound symbol stream that contains outbound data 162. The baseband or low IF TX signals 164 may be digital baseband signals (e.g., have a zero IF) or digital low IF signals, where the low IF typically will be in a frequency range of one hundred kilohertz to a few megahertz. Note that the processing performed by the transmitter processing module 146 can include, but is not limited to, scrambling, encoding, puncturing, mapping, modulation, and/or digital baseband to IF conversion.

The up conversion module 148 includes a digital-to-analog conversion (DAC) module, a filtering and/or gain module, and a mixing section. The DAC module converts the baseband or low IF TX signals 164 from the digital domain to the analog domain. The filtering and/or gain module filters and/or adjusts the gain of the analog signals prior to providing it to the mixing section. The mixing section converts the analog baseband or low IF signals into up-converted signals 166 based on a transmitter local oscillation.

The radio transmitter front end 150 includes a power amplifier and may also include a transmit filter module. The power amplifier amplifies the up-converted signals 166 to produce outbound RF signals 170, which may be filtered by the transmitter filter module, if included. The antenna structure transmits the outbound RF signals 170 via an antenna interface 171 coupled to an antenna that provides impedance matching and optional bandpass filtration.

The RF receiver 127 receives inbound RF signals 152 via the antenna and antenna interface 171 that operates to process the inbound RF signal 152 into received signal 153 for the receiver front-end 140. In general, antenna interface 171 provides impedance matching of antenna to the RF front-end 140, optional bandpass filtration of the inbound RF signal 152.

The down conversion module 142 includes a mixing section, an analog to digital conversion (ADC) module, and may also include a filtering and/or gain module. The mixing section converts the desired RF signal 154 into a down converted signal 156 that is based on a receiver local oscillation 158, such as an analog baseband or low IF signal. The ADC module converts the analog baseband or low IF signal into a digital baseband or low IF signal. The filtering and/or gain module high pass and/or low pass filters the digital baseband or low IF signal to produce a baseband or low IF signal 156 that includes a inbound symbol stream. Note that the ordering of the ADC module and filtering and/or gain module may be switched, such that the filtering and/or gain module is an analog module.

The receiver processing module 144 processes the baseband or low IF signal 156 in accordance with a millimeter wave protocol, either standard or proprietary to produce inbound data 160 such as probe data received from probe device 105 or devices 100 or 101. The processing performed by the receiver processing module 144 can include, but is not limited to, digital intermediate frequency to baseband conversion, demodulation, demapping, depuncturing, decoding, and/or descrambling.

In an embodiment of the present invention, receiver processing module 144 and transmitter processing module 146 can be implemented via use of a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions. The associated memory may be a single memory device or a plurality of memory devices that are either on-chip or off-chip. Such a memory device may be a read-only memory, random access memory, volatile memory, non-volatile memory, static memory, dynamic memory, flash memory, and/or any device that stores digital information. Note that when the processing devices implement one or more of their functions via a state machine, analog circuitry, digital circuitry, and/or logic circuitry, the associated memory storing the corresponding operational instructions for this circuitry is embedded with the circuitry comprising the state machine, analog circuitry, digital circuitry, and/or logic circuitry.

While the processing module 144 and transmitter processing module 146 are shown separately, it should be understood that these elements could be implemented separately, together through the operation of one or more shared processing devices or in combination of separate and shared processing.

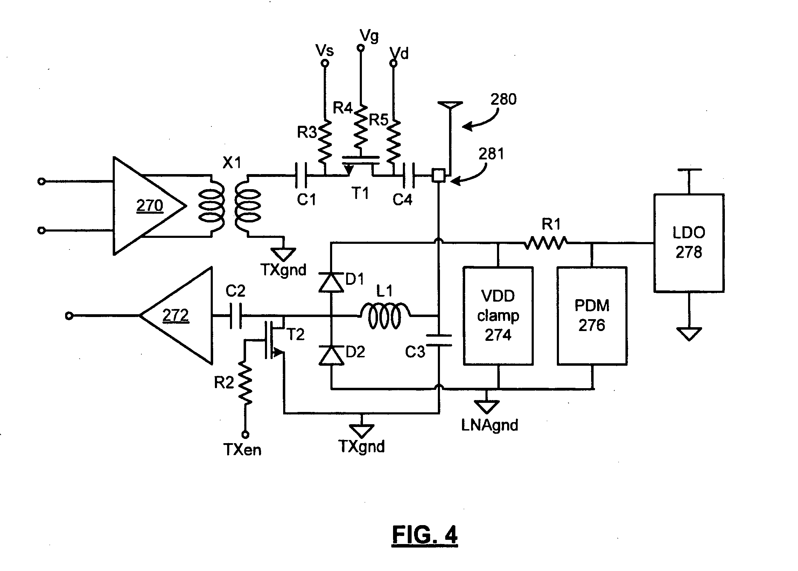

Further details including optional functions and features of the RF transceiver are discussed in conjunction with FIGs. 4-9 that follow.

Figure 4 is a schematic block diagram of an embodiment of a transmit receive switch in accordance with the present invention. An integrated CMOS T/R switch structure is shown that, for example, implements diplexer/duplexer 177. This CMOS T/R switch can accomplish receive/transmit ("RX/TX" or "T/R") time duplexing for transceivers 125 such as 802.11ac or other WLAN applications (or any other time duplexing applications). A power amplifier 270 is shown that includes balun X1 that is coupled to antenna 280 in transmit mode. Low noise amplifier 272 is coupled to antenna 280 in receive mode.

On-chip time duplexing is achieved with the integration of the T/R switch by inserting two switches in the front-end matching network of the transceiver. These two switches are implemented by a first transistor circuit that includes T1, C1 and C2, and R3, R4 and R5 and a second transistor circuit that includes T2 and resistor R2. This first transistor circuit is operable to couple the output of power amplifier 270 to the antenna port 281 in response to a transmit enable signal that indicates a transmit state by applying a gate voltage Vg. The second transistor circuit is operable to couple the input of low noise amplifier 272, via capacitor C2, to a transmit ground in response to the transmit enable signal (TXen) indicating the transmit state. An electrostatic discharge (ESD) circuit includes diodes D1 and D2, a VDD clamp 274 that clamps a power supply signal generated by low drop-out regulator (LDO) 278, resistor R1 and further includes PDM 276 to a LNA ground. In further operation, the first transistor circuit is operable to decouple the power amplifier 270 from the antenna port 281 in response to the transmit enable signal indicating a receive state. Further, the second transistor circuit is operable to decouple the low noise amplifier input from the transmit ground in response to the transmit enable signal indicating the receive state.

Transistor T1 is inserted on the RF output transmission path and capacitively coupled via capacitors C1 and C4. Secondary switch, T2, is placed after the LNA gate inductor. High transmit power is achieved by inserting a secondary shunt transistor T2 after the gate inductor L1 of the LNA 272 for minimum loss, while further protecting the RX input from the large PA output swings of PA 270.

During transmit mode, both transistors are on and T1 directs the PA output power to the antenna. The secondary switch T2 shorts the gate inductor to ground, providing the required high off-mode impedance. T2 remains open in receive mode to keep RX performance intact. TX-to-RX isolation is achieved through this configuration. The placement of electrostatic discharge (ESD) diodes D1 and D2 provides robust ESD protection.

The core transistor, T1, can be implemented via a triple-well NMOS process to increase power handling capability of the switch while minimizing the loss and enhancing the lifetime of the product, however other transistors with power handling capabilities can likewise be employed. Bias node voltages are defined by connecting to an internal voltage generation circuitry through resistors R3, R4 and R5. This effectively floats the transistor T1 and boot-straps the nodes. As a result, the node voltages follow the RF signal in phase with same amplitude, keeping the DC voltage across the nodes constant, and improving the reliability of the switch.

As the RF port 281 directly connects the chip to the output and antenna 280, ESD protection must also be considered. The ESD structure includes VDD clamp 274, PDM 276 resistor R1 and low drop-out regulator 278. To ensure minimal distortion, this ESD circuitry must remain off within the range of the largest PA output power requirements. For WLAN applications, the output power at the RF port is orders of magnitude larger than the turn on voltages of conventional ESD structures. ESD protection at the RF port could be achieved with a shunt ESD inductor. This inherently requires large area. In order to save silicon area, ESD protection is achieved by inserting diodes D1 and D2 after the gate inductor L1 at the point where the RF swing is already strongly attenuated. With the smaller swings, distortion from the ESD structure becomes negligible. A VDD clamp 274 with a fast response time is included for the positive type ESD events to quickly divert the current back to ground. A large 20kohm resistor R1 isolates the VDD clamp 274 clamp from LDO 278, such as a capacitorless LDO, used for RX power domain. There are two main distribution paths for ESD dissipation at RF, the transistor T2 and through the diodes (D1 & D2) and VDD Clamp 274.

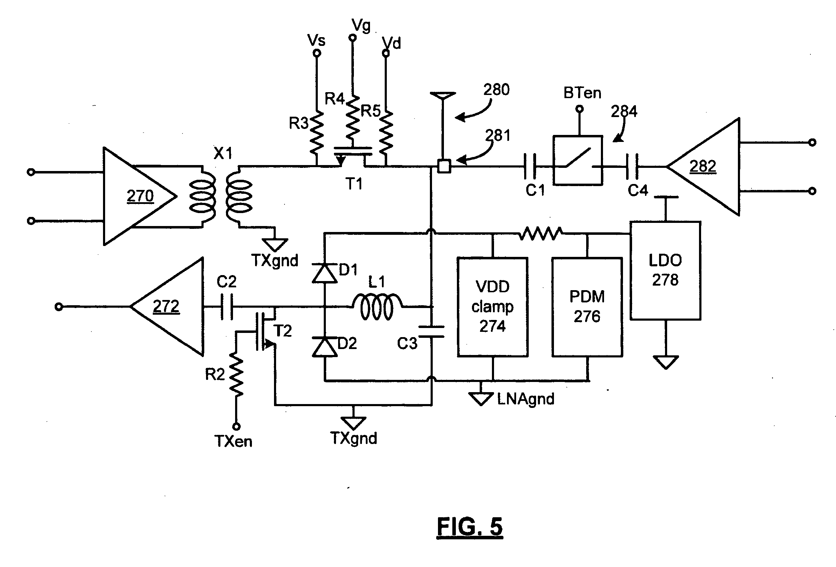

Figure 5 is a schematic block diagram of an embodiment of a transmit receive switch in accordance with the present invention. In this embodiment, an integrated CMOS single-pole-triple-throw switch structure is implemented. As an example, this switch can accomplish WLAN RX, TX, and also Bluetooth (BT) time duplexing to Bluetooth PA 282. Associated with the two terminal TR switch architecture described in conjunction with FIG. 4, a third terminal is coupled to high power switch 284 that responsive to a Bluetooth enable signal. The high power switch 284 can be implemented via three triple-well transistors in series. A bias scheme is applied to increase the lifetime of the switch while providing high off-mode impedance across a wide range of power. Placement of ESD diodes D1 and D2 again provides robust ESD protection.

Integration of single-pole-triple-throw (SP3T) switch with ESD protection combines the RF of WLAN and BT with a single input/output port. Associated with the two terminal TR switch architecture, a third terminal is combined with the high power switch 284 (HPSW) in series. Application of the HPSW 284 can be expanded to any time duplexed systems with any numbers of ports. The upper limit on the achievable number of ports is set by the tolerable parasitic capacitance from the HPSW 284.

In the configuration presented above, the HPSW 284 is off during WLAN mode. As the HPSW 284 presents a high output impedance, loss is minimized while isolation to the output of Bluetooth PA 282 is maximized. For BT transmit, the HPSW 284 turns on and shorts the output of BT PA 282 to antenna 280 via capacitive couplers C1 and C4. To prevent WLAN from loading the output of BT PA 282, T1 is turned off and T2 is turned on.

As discussed above, HPSW 284 is implemented with three transistors in series. Each individual switch follows the design scheme used in T1; a triple-well process with floating node voltages. Appropriate biasing in the off-state used to increase the off-mode impedance and to extend the lifetime of the switch. Negative gate-to-source/drain node voltages are used to increase the off-mode impedance, but still kept slightly below the foundry recommended operation limit for reliability concerns. Simultaneously, the drain/source-to-p-well junction diodes must be kept reverse biased. Finally, a pull-up switch provides an AC ground and increases WLAN-to-BT isolation.

ESD protection follows the scheme presented in conjunction with FIG. 4 - however, ESD robustness is improved by removing the coupling capacitors on T1. This presents an extra exit path for ESD energy.

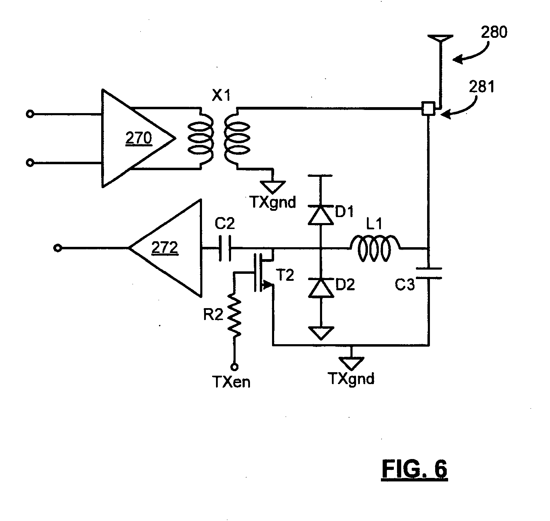

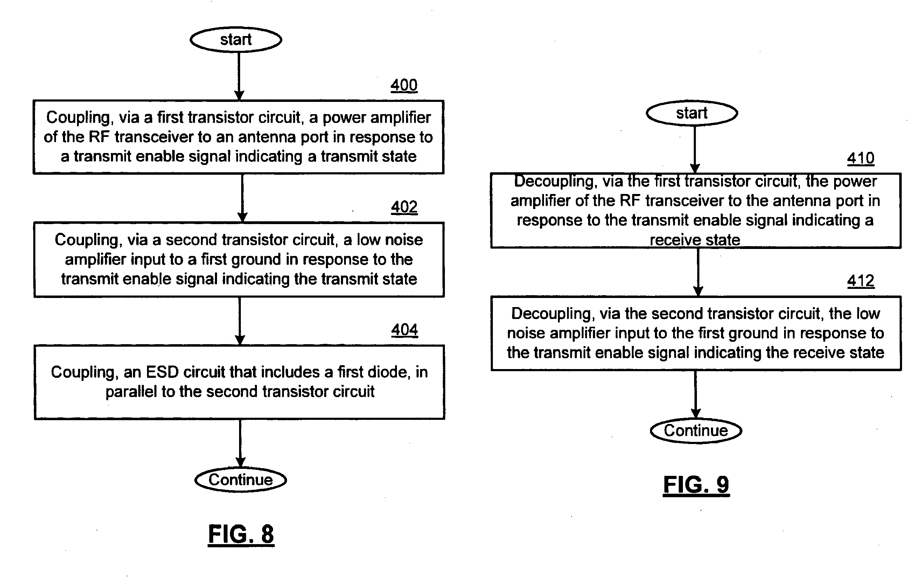

Figure 6 is a schematic block diagram of an embodiment of a transmit receive switch in accordance with the present invention. Another integrated CMOS T/R switch structure accomplishes RX / TX time duplexing for WLAN applications (or any other time duplexing applications). In this configuration, the two terminal T/R switch architecture of FIG. 8 is simplified by removing the TX series switch T1 and directly tying the output of the PA balun X1 to the port for antenna 280. This requires high output impedance for the PA balun to minimize RX performance degradation. Secondary port of PA balun is used to provide solid ESD protection. The receive portion of the architecture is similar.

This configuration provides a robust design structure - that improves operational output power range and stronger protection against ESD events. A fundamental trade-off lies within the implementation of the core TR switch device - power handling capability versus performance. Power handling capability of the switch is dictated by the size of the switch. A larger sized device promises an increase in achievable output power. However, an upper limit exists as parasitics start to diminish the benefit of using a larger switch. Removing the switch altogether greatly improves the achievable output power range. Furthermore, minimum loss from the integration of T/R for transmit mode is accomplished. Finally, this architecture shows the strongest protection against ESD events as the passive balun directly connects to the port to antenna 280. ESD diodes D1 and D2 can still be injected used in parallel with the T2 switch to further improve ESD robustness. Improvements on TX performance, however, come with the penalty of RX performance degradation. The degradation can be mitigated when the PA balun X1 is designed to have a large output impedance.

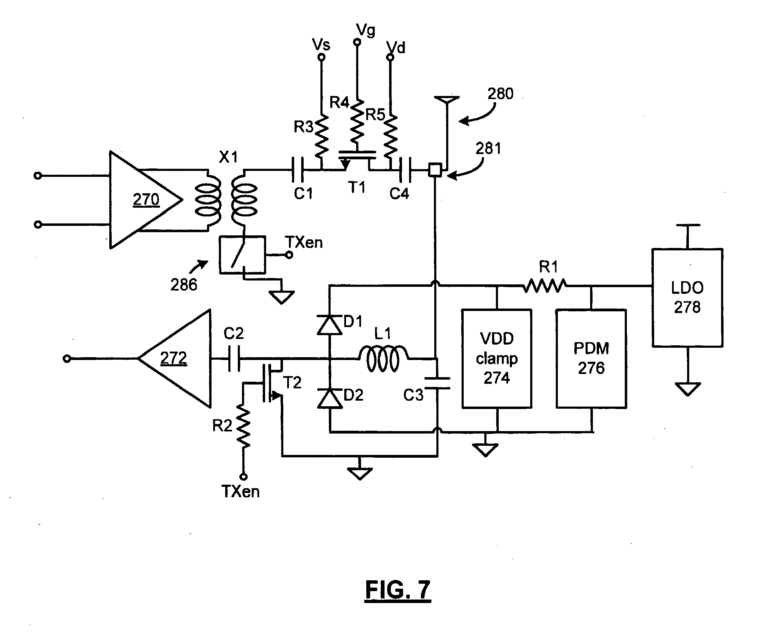

Figure 7 is a schematic block diagram of an embodiment of a transmit receive switch in accordance with the present invention. Another integrated CMOS TR switch structure accomplishes RX/TX time duplexing for WLAN applications (or any other time duplexing applications). To achieve higher transmit power and increase PA efficiency, the PA balun X1 is designed to have an inductive output impedance to absorb parasitic capacitance at the output port to antenna 280. In general, larger spurious coupling becomes a byproduct with the integration of T/R switch. Tying the TX output to RX opens another coupling path for the noise power to couple back to RX input and causes receive sensitivity degradation. A third switch (T3) is inserted at the ground node of the secondary side of the PA balun X1 to (1) maximize the output off-mode impedance and (2) disconnect the ground coupling path to RX. A regular CMOS device can be used for this purpose, sized to handle the output current. The ESD follows the same protection scheme introduced in conjunction with FIG. 4.

Figure 8 is a flow diagram of an embodiment of a method in accordance with the present invention. In particular a method is presented for use in conjunction with one or more functions and features described in conjunction with FIGs 1-7. In step 400, a power amplifier of the RF transceiver is coupled, via a first transistor circuit, to an antenna port in response to a transmit enable signal indicating a transmit state. In step 402, a low noise amplifier input is coupled, via a second transistor circuit, to a first ground in response to the transmit enable signal indicating the transmit state. In step 404, an electrostatic discharge (ESD) circuit that includes a first diode is coupled in parallel to the second transistor circuit.

In embodiments of the present invention, the method can include coupling, via a second diode of the ESD circuit, the low noise amplifier input to a power supply voltage and clamping, via a voltage clamp coupled to the second diode, the power supply voltage to a second ground. The method can include inductively coupling the low noise amplifier input to the antenna port; and capacitively coupling the low noise amplifier of the RF transceiver to the low noise amplifier input. The method can include generating, via the power amplifier, a differential output signal; and converting the differential output signal to a single-ended output signal via a balun. The method can include capacitively coupling the first transistor circuit to the single-ended output signal and to the antenna port. The method can include floating a plurality of transistor nodes of the first transistor circuit via a corresponding plurality of resistors.

Figure 9 is a flow diagram of an embodiment of a method in accordance with the present invention. In particular a method is presented for use in conjunction with one or more functions and features described in conjunction with FIGs 1-8. In step 410, the power amplifier of the RF transceiver is decoupled via the first transistor circuit, to the antenna port in response to the transmit enable signal indicating a receive state. In step 412, the low noise amplifier input is decoupled via the first transistor circuit, to the first ground in response to the transmit enable signal indicating the receive state.

In an embodiment of the present invention, the T/R switch achieves time-duplexing for a RF transceiver that operates in accordance with an 802.11ac standard.

As may be used herein, the terms "substantially" and "approximately" provides an industry-accepted tolerance for its corresponding term and/or relativity between items. Such an industry-accepted tolerance ranges from less than one percent to fifty percent and corresponds to, but is not limited to, component values, integrated circuit process variations, temperature variations, rise and fall times, and/or thermal noise. Such relativity between items ranges from a difference of a few percent to magnitude differences. As may also be used herein, the term(s) "operably coupled to", "coupled to", and/or "coupling" includes direct coupling between items and/or indirect coupling between items via an intervening item (e.g., an item includes, but is not limited to, a component, an element, a circuit, and/or a module) where, for indirect coupling, the intervening item does not modify the information of a signal but may adjust its current level, voltage level, and/or power level. As may further be used herein, inferred coupling (i.e., where one element is coupled to another element by inference) includes direct and indirect coupling between two items in the same manner as "coupled to". As may even further be used herein, the term "operable to" or "operably coupled to" indicates that an item includes one or more of power connections, input(s), output(s), etc., to perform, when activated, one or more its corresponding functions and may further include inferred coupling to one or more other items. As may still further be used herein, the term "associated with", includes direct and/or indirect coupling of separate items and/or one item being embedded within another item. As may be used herein, the term "compares favorably", indicates that a comparison between two or more items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

As may also be used herein, the terms "processing module", "processing circuit", and/or "processing unit" may be a single processing device or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on hard coding of the circuitry and/or operational instructions. The processing module, module, processing circuit, and/or processing unit may be, or further include, memory and/or an integrated memory element, which may be a single memory device, a plurality of memory devices, and/or embedded circuitry of another processing module, module, processing circuit, and/or processing unit. Such a memory device may be a read-only memory, random access memory, volatile memory, non-volatile memory, static memory, dynamic memory, flash memory, cache memory, and/or any device that stores digital information. Note that if the processing module, module, processing circuit, and/or processing unit includes more than one processing device, the processing devices may be centrally located (e.g., directly coupled together via a wired and/or wireless bus structure) or may be distributedly located (e.g., cloud computing via indirect coupling via a local area network and/or a wide area network). Further note that if the processing module, module, processing circuit, and/or processing unit implements one or more of its functions via a state machine, analog circuitry, digital circuitry, and/or logic circuitry, the memory and/or memory element storing the corresponding operational instructions may be embedded within, or external to, the circuitry comprising the state machine, analog circuitry, digital circuitry, and/or logic circuitry. Still further note that, the memory element may store, and the processing module, module, processing circuit, and/or processing unit executes, hard coded and/or operational instructions corresponding to at least some of the steps and/or functions illustrated in one or more of the Figures. Such a memory device or memory element can be included in an article of manufacture.

The present invention has been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention. One of average skill in the art will also recognize that the functional building blocks, and other illustrative blocks, modules and components herein, can be implemented as illustrated or by discrete components, application specific integrated circuits, processors executing appropriate software and the like or any combination thereof.

The present invention may have also been described, at least in part, in terms of one or more embodiments. An embodiment of the present invention is used herein to illustrate the present invention, an aspect thereof, a feature thereof, a concept thereof, and/or an example thereof. A physical embodiment of an apparatus, an article of manufacture, a machine, and/or of a process that embodies the present invention may include one or more of the aspects, features, concepts, examples, etc. described with reference to one or more of the embodiments discussed herein. Further, from figure to figure, the embodiments may incorporate the same or similarly named functions, steps, modules, etc. that may use the same or different reference numbers and, as such, the functions, steps, modules, etc. may be the same or similar functions, steps, modules, etc. or different ones.

While the transistors in the above described figure(s) is/are shown as field effect transistors (FETs), as one of ordinary skill in the art will appreciate, the transistors may be implemented using any type of transistor structure including, but not limited to, bipolar, metal oxide semiconductor field effect transistors (MOSFET), N-well transistors, P-well transistors, enhancement mode, depletion mode, and zero voltage threshold (VT) transistors.

Unless specifically stated to the contra, signals to, from, and/or between elements in a figure of any of the figures presented herein may be analog or digital, continuous time or discrete time, and single-ended or differential. For instance, if a signal path is shown as a single-ended path, it also represents a differential signal path. Similarly, if a signal path is shown as a differential path, it also represents a single-ended signal path. While one or more particular architectures are described herein, other architectures can likewise be implemented that use one or more data buses not expressly shown, direct connectivity between elements, and/or indirect coupling between other elements as recognized by one of average skill in the art.

The term "module" is used in the description of the various embodiments of the present invention. A module includes a processing module, a functional block, hardware, and/or software stored on memory for performing one or more functions as may be described herein. Note that, if the module is implemented via hardware, the hardware may operate independently and/or in conjunction software and/or firmware. As used herein, a module may contain one or more sub-modules, each of which may be one or more modules.

While particular combinations of various functions and features of the present invention have been expressly described herein, other combinations of these features and functions are likewise possible. The present invention is not limited by the particular examples disclosed herein and expressly incorporates these other combinations.

## Claims

1. A transmit/receive (T/R) switch for use in conjunction with a radio frequency (RF transceiver, the T/R switch comprising:
a first transistor circuit that is operable to couple an output port for a power amplifier (270) of the RF transceiver to an antenna port (281) in response to a transmit enable signal indicating a transmit state;
a second transistor circuit operable to couple an input port for a low noise amplifier (272) of the RF transceiver to a first ground in response to the transmit enable signal indicating the transmit state; and
an electrostatic discharge (ESD) circuit that includes a first diode that is coupled in parallel to the second transistor circuit between the input port for the low noise amplifier (272) and a second ground;
wherein the ESD circuit includes a second diode that couples the input port for the low noise amplifier (272) to a power supply voltage;
wherein the input port for the low noise amplifier (272) is inductively coupled to the antenna port (281).

2. The transmit/receive switch of claim 1 wherein the ESD circuit includes a voltage clamp (274) coupled to the second diode that clamps the power supply voltage to the second ground.

3. The transmit/receive switch of claim 1 wherein the input port for the low noise amplifier (272) is capacitively coupleable to the low noise amplifier (272).

4. The transmit/receive switch of claim 1, further adapted to convert a differential output signal of the power amplifier (270) to a single-ended output signal via a balun.

5. The transmit/receive switch of claim 4 wherein the first transistor circuit is capacitively coupled to the single-ended output signal and to the antenna port (281).

6. The transmit/receive switch of claim 1 wherein the first transistor circuit includes a triple-well n-channel metal oxide semiconductor (NMOS) transistor.

7. The transmit/receive switch of claim 1 wherein the first transistor circuit includes a plurality of transistor nodes that are floated via a corresponding plurality of resistors.

8. The transmit/receive switch of claim 1 wherein the first transistor circuit is operable to decouple the output port for the power amplifier (270) from the antenna port (281) in response to the transmit enable signal indicating a receive state; and
wherein the second transistor circuit is operable to decouple the input port for the low noise amplifier (272) from the first ground in response to the transmit enable signal indicating the receive state.

9. The transmit/receive switch of claim 1 adapted to cooperate with the RF transceiver operating in accordance with an 802.11 ac standard.

10. A method for use in conjunction with a transmit/receive (T/R) switch for use in conjunction with a radio frequency (RF) transceiver, the method comprising:
coupling (400), via a first transistor circuit, an output port for a power amplifier of the RF transceiver to an antenna port in response to a transmit enable signal indicating a transmit state;
coupling (402), via a second transistor circuit, an input port for a low noise amplifier of the RF transceiver to a first ground in response to the transmit enable signal indicating the transmit state; and
coupling (404) an electrostatic discharge (ESD) circuit that includes a first diode in parallel to the second transistor circuit between the input port for the low noise amplifier and a second ground;
wherein the ESD circuit includes a second diode that couples the input port for the low noise amplifier to a power supply voltage;
wherein the input port for the low noise amplifier is inductively coupled to the antenna port.

11. The method of claim 10 further comprising:
clamping, via a voltage clamp coupled to the second diode, the power supply voltage to the second ground.

12. The method of claim 10 further comprising:
capacitively coupling the input port for the low noise amplifier to the low noise amplifier.

13. The method of claim 10 further comprising:
generating, via the power amplifier, a differential output signal; and
converting the differential output signal to a single-ended output signal via a balun.

## Patentansprüche

1. Sende-/Empfangsschalter zur Verwendung in Zusammenhang mit einem Hochfrequenz (HF) -Transceiver, wobei der Sende-/Empfangsschalter aufweist:
eine erste Transistorschaltung, die dazu betreibbar ist, einen Ausgangsport für einen Leistungsverstärker (270) des HF-Transceivers im Ansprechen auf ein Sendeaktivierungssignal, das einen Sendezustand angibt, an einen Antennenport (281) zu koppeln;
eine zweite Transistorschaltung, die dazu betreibbar ist, einen Eingangsport für einen rauscharmen Verstärker (272) des HF-Transceivers im Ansprechen auf das Sendeaktivierungssignal, das den Sendezustand angibt, an eine erste Masse zu koppeln; und
eine elektrostatische Entladungsschaltung, die eine erste Diode aufweist, und die parallel zu der zweiten Transistorschaltung zwischen den Eingangsport für den rauscharmen Verstärker (272) und eine zweite Masse geschaltet ist;
wobei die elektrostatische Entladungsschaltung eine zweite Diode aufweist, die den Eingangsport für den rauscharmen Verstärker (272) mit einer Netzspannung koppelt;
wobei der Eingangsport für den rauscharmen Verstärker (272) induktiv an den Antennenport (281) gekoppelt ist.

2. Sende-/Empfangsschalter nach Anspruch 1, wobei die elektrostatische Entladungsschaltung eine Spannungsklemme (274) aufweist, die an die zweite Diode gekoppelt ist, welche die Netzspannung an die zweite Masse klemmt.

3. Sende-/Empfangsschalter nach Anspruch 1, wobei der Eingangsport für den rauscharmen Verstärker (272) kapazitiv an den rauscharmen Verstärker (272) gekoppelt werden kann.

4. Sende-/Empfangsschalter nach Anspruch 1, der des Weiteren dazu ausgelegt ist, ein differentielles Ausgangssignal des Leistungsverstärkers (270) über eine Symmetrieschaltung in ein unsymmetrisches Ausgangssignal umzuwandeln.

5. Sende-/Empfangsschalter nach Anspruch 4, wobei die erste Transistorschaltung kapazitiv an das unsymmetrische Ausgangssignal und an den Antennenport (281) gekoppelt ist.

6. Sende-/Empfangsschalter nach Anspruch 1, wobei die erste Transistorschaltung einen n-Kanal Metall-Oxid-Halbleiter (n-channel metal oxide semiconductor; NMOS) -Transistor mit drei Wannen aufweist.

7. Sende-/Empfangsschalter nach Anspruch 1, wobei die erste Transistorschaltung eine Vielzahl von Transistorknoten aufweist, die über eine korrespondierende Vielzahl von Widerständen gefloatet werden.

8. Sende-/Empfangsschalter nach Anspruch 1, wobei die erste Transistorschaltung dazu betreibbar ist, den Ausgangsport für den Leistungsverstärker (270) im Ansprechen auf das Sendeaktivierungssignal, das einen Empfangszustand angibt, von dem Antennenport (281) zu entkoppeln; und
wobei die zweite Transistorschaltung dazu betreibbar ist, den Eingangsport für den rauscharmen Verstärker (272) im Ansprechen auf das Sendeaktivierungssignal, das den Empfangszustand angibt, von der ersten Masse zu entkoppeln.

9. Sende-/Empfangsschalter nach Anspruch 1, der dazu ausgelegt ist, mit dem HF-Transceiver, der gemäß einem 802.11 ac Standard arbeitet, zusammenzuarbeiten.

10. Verfahren zur Verwendung in Zusammenhang mit einem Sende-/Empfangsschalter zur Verwendung in Zusammenhang mit einem Hochfrequenz (HF) -Transceiver, wobei das Verfahren umfasst:
Koppeln (400), über eine erste Transistorschaltung, eines Ausgangsports für einen Leistungsverstärker des HF-Transceivers im Ansprechen auf ein Sendeaktivierungssignal, das einen Sendezustand angibt, an einen Antennenport;
Koppeln (402), über eine zweite Transistorschaltung, eines Eingangsports für einen rauscharmen Verstärker des HF-Transceivers im Ansprechen auf das Sendeaktivierungssignal, das den Sendezustand angibt, an eine erste Masse; und
Koppeln (404) einer elektrostatischen Entladungsschaltung, die eine erste Diode aufweist, parallel zu der zweiten Transistorschaltung zwischen den Eingangsport für den rauscharmen Verstärker und eine zweite Masse;
wobei die elektrostatische Entladungsschaltung eine zweite Diode aufweist, die den Eingangsport für den rauscharmen Verstärker mit einer Netzspannung koppelt;
wobei der Eingangsport für den rauscharmen Verstärker induktiv an den Antennenport gekoppelt wird.

11. Verfahren nach Anspruch 10, das des Weiteren umfasst:
Klemmen, über eine Spannungsklemme, die an die zweite Diode gekoppelt ist, der Netzspannung an die zweite Masse.

12. Verfahren nach Anspruch 10, das des Weiteren umfasst:
kapazitives Koppeln des Eingangsports für den rauscharmen Verstärker an den rauscharmen Verstärker.

13. Verfahren nach Anspruch 10, das des Weiteren umfasst:
Erzeugen, über den Leistungsverstärker, eines differentiellen Ausgangssignals; und
Umwandeln des differentiellen Ausgangssignals über eine Symmetrieschaltung in ein unsymmetrisches Ausgangssignal.

## Revendications

1. Commutateur de transmission/réception (T/R) destiné à une utilisation en conjonction avec un émetteur-récepteur en fréquences radio (RF), le commutateur T/R comprenant :
un premier circuit transistorisé qui est utilisable pour coupler un port de sortie pour un amplificateur (270) de puissance de l'émetteur-récepteur RF à un port (281) d'antenne en réponse à un signal d'activation de transmission indiquant un état de transmission ;
un deuxième circuit transistorisé utilisable pour coupler un port d'entrée pour un amplificateur (272) à faible bruit de l'émetteur-récepteur RF à une première masse en réponse au signal d'activation de transmission indiquant l'état de transmission ; et
un circuit de décharge électrostatique (ESD) qui inclut une première diode qui est couplée en parallèle au deuxième circuit transistorisé entre le port d'entrée pour l'amplificateur (272) à faible bruit et une deuxième masse ;
dans lequel le circuit ESD inclut une deuxième diode qui couple le port d'entrée pour l'amplificateur (272) à faible bruit à une tension d'alimentation électrique ;
dans lequel le port d'entrée pour l'amplificateur (272) à faible bruit est relié par couplage inductif au port (281) d'antenne.

2. Commutateur de transmission/réception selon la revendication 1, dans lequel le circuit ESD inclut un caleur (274) de tension couplé à la deuxième diode qui cale la tension d'alimentation électrique sur la deuxième masse.

3. Commutateur de transmission/réception selon la revendication 1, dans lequel le port d'entrée pour l'amplificateur (272) à faible bruit peut être relié par couplage capacitif à l'amplificateur (272) à faible bruit.

4. Commutateur de transmission/réception selon la revendication 1, adapté en outre à convertir un signal de sortie différentiel de l'amplificateur (270) de puissance en un signal de sortie asymétrique par l'intermédiaire d'un symétriseur.

5. Commutateur de transmission/réception selon la revendication 4, dans lequel le premier circuit transistorisé est relié par couplage capacitif au signal de sortie asymétrique et au port (281) d'antenne.

6. Commutateur de transmission/réception selon la revendication 1, dans lequel le premier circuit transistorisé inclut un transistor métal-oxyde-semiconducteur à canal n (NMOS) à triple puits.

7. Commutateur de transmission/réception selon la revendication 1, dans lequel le premier circuit transistorisé inclut une pluralité de noeuds de transistors qui sont rendus flottants par l'intermédiaire d'une pluralité correspondante de résistances.

8. Commutateur de transmission/réception selon la revendication 1, dans lequel le premier circuit transistorisé est utilisable pour découpler le port de sortie pour l'amplificateur (270) de puissance du port (281) d'antenne en réponse au signal d'activation de transmission indiquant un état de réception ; et
dans lequel le deuxième circuit transistorisé est utilisable pour découpler le port d'entrée pour l'amplificateur (272) à faible bruit de la première masse en réponse au signal d'activation de transmission indiquant l'état de réception.

9. Commutateur de transmission/réception selon la revendication 1 adapté à coopérer avec l'émetteur-récepteur RF fonctionnant conformément à une norme 802.11ac.

10. Procédé destiné à une utilisation en conjonction avec un commutateur de transmission/réception (T/R) destiné à une utilisation en conjonction avec un émetteur-récepteur en fréquences radio (RF), le procédé comprenant :
le couplage (400), par l'intermédiaire d'un premier circuit transistorisé, d'un port de sortie pour un amplificateur de puissance de l'émetteur-récepteur RF à un port d'antenne en réponse à un signal d'activation de transmission indiquant un état de transmission ;
le couplage (402), par l'intermédiaire d'un deuxième circuit transistorisé d'un port d'entrée pour un amplificateur à faible bruit de l'émetteur-récepteur RF à une première masse en réponse au signal d'activation de transmission indiquant l'état de transmission ; et
le couplage (404) d'un circuit de décharge électrostatique (ESD) qui inclut une première diode en parallèle au deuxième circuit transistorisé entre le port d'entrée pour l'amplificateur à faible bruit et une deuxième masse ;
dans lequel le circuit ESD inclut une deuxième diode qui couple le port d'entrée pour l'amplificateur à faible bruit à une tension d'alimentation électrique ;
dans lequel le port d'entrée pour l'amplificateur à faible bruit est relié par couplage inductif au port d'antenne.

11. Procédé selon la revendication 10, comprenant en outre :
le calage, par l'intermédiaire d'un caleur de tension couplé à la deuxième diode, de la tension d'alimentation électrique sur la deuxième masse.

12. Procédé selon la revendication 10, comprenant en outre :
la liaison par couplage capacitif du port d'entrée pour l'amplificateur à faible bruit à l'amplificateur à faible bruit.

13. Procédé selon la revendication 10, comprenant en outre :
la génération, par l'intermédiaire de l'amplificateur de puissance, d'un signal de sortie différentiel ; et
la conversion du signal de sortie différentiel en un signal de sortie asymétrique par l'intermédiaire d'un symétriseur.
